# FASCICULE DE BREVET EUROPEEN

(11) **EP 2 747 048 B1**
(45) Date de publication et mention de la délivrance du brevet: **19.08.2015**
(21) Numéro de dépôt: 13197709.2
(22) Date de dépôt: 17.12.2013
(51) Int. Cl.: G08C 17/02, H01H 9/02, H04L 12/28

(54) **Procédé de commande d'un volet et installation associée**
Verfahren zur Fensterladensteuerung und entsprechende Anordnung
Method for controlling a flap and associated installation

(30) Priorité: 21.12.2012 FR 1262727
(43) Date de publication de la demande: 25.06.2014
(73) Titulaire: Somfy SAS, 74300 Cluses (FR)
(72) Inventeur: Mugnier, Mickaël, FR 74130 Bonneville (FR); Devis, Frédéric, 74330 Epagny (FR); Valleix, David, 72793 Pfullingen (DE); Cosson, Jacques, 70806 Kornwestheim (DE)
(74) Mandataire: Bugnion Genève

(56) Documents cités:
- EP-A1- 1 486 640
- FR-A1- 2 858 491

## Description

### DOMAINE TECHNIQUE DE L'INVENTION

L'invention se rapporte à la commande d'un équipement d'une installation domotique à l'aide d'une télécommande nomade. Elle se rapporte plus spécifiquement à la commande d'un équipement pouvant effectuer des changements d'état d'amplitude variable depuis un état courant, par exemple un éclairage à intensité lumineuse variable, ou un écran mobile pouvant prendre diverses positions entre une position d'occultation et une position rétractée.

### ÉTAT DE LA TECHNIQUE ANTÉRIEURE

On sait commander un actionneur d'un équipement domotique tel qu'un écran d'occultation à l'aide d'une télécommande nomade à interface apte à détecter l'amplitude d'un déplacement d'un doigt d'un utilisateur. Cette interface peut être par exemple un dispositif à molette dont la rotation par incréments est détectée par des contacts électriques, ou par des moyens électroniques ou optiques. Chaque incrément de rotation de la molette correspond à un déplacement incrémentiel de l'actionneur. Il est également connu de cumuler des incréments de rotation de la molette avant d'émettre un ordre de déplacement d'une valeur correspondant au cumul des incréments.

Avec de tels dispositifs, l'amplitude du déplacement de l'actionneur est linéairement coordonnée à l'amplitude du déplacement de la molette. Le pas d'incrémentation est généralement assez fin pour pouvoir réaliser des déplacements fins de l'actionneur, correspondant par exemple à une orientation angulaire des lames d'un store vénitien ou d'un store à lames verticales. Cette précision se fait toutefois au détriment de l'ergonomie lorsque des mouvements de grande amplitude sont souhaités, par exemple pour atteindre directement une position de fin de course. Il est en effet alors nécessaire d'effectuer avec la molette plusieurs tours, pour couvrir un angle de rotation correspondant à l'amplitude du déplacement jusqu'à la position éloignée souhaitée.

Alternativement, on peut prévoir sur une même télécommande deux interfaces tactiles, l'une dédiée à des déplacements rapides ou de grande amplitude et l'autre à des déplacements lents ou de faible amplitude. Un tel dispositif est décrit dans le document EP1 486 640.

### EXPOSÉ DE L'INVENTION

L'invention vise à remédier aux inconvénients de l'état de la technique et à permettre avec une même interface à la fois des réglages fins et des commandes de grande amplitude.

Pour ce faire est proposé, suivant un premier aspect de l'invention, un procédé de commande d'au moins un équipement d'une installation domotique se trouvant dans un état courant et susceptible de subir des changements d'état d'amplitude variable entre l'état courant et au moins un état extrême, le procédé étant mis en oeuvre à l'aide d'une télécommande comportant une interface permettant de détecter au moins une amplitude A ou une vitesse V d'un déplacement d'un doigt d'un utilisateur, procédé suivant lequel :
- lorsque une condition dite « de pilotage long » est remplie, cette condition étant fonction au moins de l'amplitude A ou de la vitesse V du déplacement, l'équipement change d'état jusqu'à atteindre l'état extrême, ou change d'état avec une amplitude B fonction de l'amplitude détectée A et un rapport d'amplitudes R=B/A strictement supérieur à un seuil d'amplification R_{S} donné ;
- lorsque la condition de pilotage long n'est pas remplie, l'équipement change d'état avec une amplitude B fonction de l'amplitude détectée A et un rapport d'amplification R=B/A inférieur ou égal au seuil d'amplification R_{S}.

L'amplitude et/ou la vitesse du déplacement du doigt déterminent donc le régime de commande. Suivant un mode de réalisation, la condition de pilotage long est une fonction au moins de l'amplitude. Lorsque l'amplitude détectée du déplacement du doigt est faible, on considère que l'utilisateur cherche un pilotage fin de l'équipement, d'où le choix d'un rapport de d'amplitudes B/A peu élevé. Lorsqu'au contraire l'amplitude du déplacement du doigt est importante, on considère que l'utilisateur cherche à effectuer un changement d'état de grande amplitude. Naturellement, on aura soin de distinguer un déplacement de grande amplitude d'une série de déplacements de moindre amplitude, séparés par des intervalles de temps morts. Pour ce faire, on pourra par exemple déterminer qu'un déplacement est achevé lorsque après la détection d'un déplacement, un intervalle de temps dépassant une durée prédéterminée s'écoule sans déplacement. En d'autres termes, on détermine l'amplitude A comme une amplitude d'un déplacement entre deux périodes consécutives d'absence de détection de déplacement dépassant une durée prédéterminée. L'équipement change d'état à l'issue d'une période d'absence de détection de déplacement dépassant une durée prédéterminée.

Suivant un autre mode de réalisation, la condition de pilotage long est une fonction d'une vitesse détectée du déplacement du doigt, qui peut d'ailleurs se déduire d'une mesure d'amplitude par unité de temps. Lorsque la vitesse détectée du déplacement du doigt est faible, on considère que l'utilisateur cherche un pilotage fin de l'équipement, d'où le choix d'un rapport de d'amplitudes B/A peu élevé. Lorsqu'au contraire la vitesse du déplacement du doigt est élevée, on considère que l'utilisateur cherche à effectuer un changement d'état de grande amplitude.

Pour le pilotage long, on prévoit dans deux stratégies, qui peuvent le cas échéant, mais pas nécessairement, être combinées : on peut choisir de commander l'équipement avec un rapport d'amplitudes B/A plus élevé que le pilotage fin ; on peut également choisir d'emmener directement l'équipement dans l'état extrême considéré. On peut enfin faire un choix entre les deux possibilités suivant un autre critère, par exemple la vitesse du déplacement du doigt. Ainsi, dans des conditions dites de pilotage long, en réponse à un déplacement du doigt ayant une vitesse détectée supérieure à un premier seuil de vitesse donné, l'équipement change d'état avec une amplitude B fonction de l'amplitude détectée du déplacement du doigt et un rapport d'amplitudes B/A supérieur ou égal à un deuxième seuil d'amplification donné strictement supérieur au premier seuil d'amplification ; en réponse à un déplacement du doigt ayant une vitesse détectée supérieure à un deuxième seuil de vitesse donné supérieur au premier seuil de vitesse, l'équipement effectue depuis l'état courant un changement d'état jusqu'à atteindre l'état extrême.

La vitesse détectée par l'interface peut notamment être déduite d'une valeur d'amplitude du déplacement du doigt et du temps détecté pour le déplacement du doigt.

Suivant un mode de réalisation, un circuit électronique de la télécommande détermine si la condition de pilotage long est ou non remplie, et envoie à l'équipement des ordres correspondant de changement d'état.

Alternativement, la télécommande envoie à l'équipement des données représentatives des déplacements détectés par l'interface, par exemple des données représentatives de l'évolution temporelle de l'amplitude ou des données correspondant à une amplitude observée dans une fenêtre temporelle donnée, ou des données de vitesse de déplacement, et c'est un circuit électronique de l'équipement qui détermine si la condition de pilotage long est ou non remplie, sur la base des données reçues.

Suivant un mode de réalisation préféré, l'équipement comporte un actionneur électromécanique, les changements d'états correspondants à des mouvements de l'actionneur électromécanique. L'actionneur électromécanique peut notamment piloter un écran d'occultation entre une position de repli et une position de déploiement, ou un store à lames verticales ou horizontales entre différentes positions angulaires des lames assurant une occultation plus ou moins importante.

Suivant un autre mode de réalisation, l'équipement comporte un éclairage à intensité lumineuse variable, les changements d'états correspondants à des variations d'intensité lumineuse de l'éclairage.

De préférence, l'interface est apte à détecter au moins deux sens opposés du déplacement du doigt, sens associés chacun à un parmi au moins deux sens opposées de changement d'état de l'équipement. Dans cette hypothèse, le changement d'état de l'actionneur est effectué dans le sens de changement d'état associé au sens de déplacement du doigt détecté. Pour un actionneur électromécanique associé par exemple à un store, un écran ou un éclairage directionnel, le sens de changement d'état pourra correspondre par exemple à un sens de rotation ou plus généralement à un mouvement de l'actionneur. Pour un éclairage à intensité lumineuse variable, un sens de changement d'état pourra être un sens d'augmentation de l'intensité lumineuse et le sens opposé un sens de diminution de l'intensité lumineuse.

Suivant un mode de réalisation, le rapport d'amplitudes B/A est une fonction croissante de l'amplitude A. Le rapport d'amplitudes B/A peut notamment être une fonction continument croissante de l'amplitude A ou une fonction en escalier. Il peut s'agir en particulier d'une fonction strictement croissante et notamment d'une fonction exponentielle de l'amplitude A.

Suivant un mode de réalisation, la condition de pilotage long est remplie seulement si la vitesse détectée V est supérieure à un seuil de vitesse V_{S}. Préférentiellement, la condition de pilotage long est une fonction de la vitesse détectée V et de l'amplitude détectée A. On peut ainsi mieux distinguer des ordres réels de manipulations involontaires. De préférence, la condition de pilotage long est remplie si et seulement si la vitesse détectée V est supérieure au seuil de vitesse V_{S} et l'amplitude A est supérieure à un seuil d'amplitude A_{S} donné.

Suivant un mode de réalisation, on fait en sorte que, dans des conditions de pilotage long :
- lorsque la vitesse détectée V est supérieure au seuil de vitesse donné V_{S} et inférieure à un deuxième seuil V_{S2} strictement supérieur au seuil V_{S}, l'équipement change d'état avec une amplitude B fonction de l'amplitude détectée du déplacement du doigt et un rapport d'amplitudes B/A strictement supérieur au seuil d'amplification R_{S} ;
- lorsque la vitesse détectée V est supérieure au deuxième seuil donné V_{S2}, l'équipement change d'état jusqu'à atteindre l'état extrême.

Suivant un autre aspect de l'invention, celle-ci a trait à une télécommande nomade sans fil d'un équipement susceptible de subir des changements d'état d'amplitude variable entre au moins un état courant et au moins un état extrême, la télécommande comportant une interface permettant de détecter au moins une amplitude d'un déplacement d'un doigt d'un utilisateur, caractérisé en ce qu'elle comporte en outre des moyens pour :
- en réponse à un déplacement du doigt remplissant une condition dite « de pilotage long » fonction au moins de l'amplitude A ou d'une vitesse V du déplacement, envoyer à l'équipement un ordre d'effectuer depuis l'état courant un changement d'état jusqu'à atteindre l'état extrême, ou de changement d'état avec une amplitude B fonction de l'amplitude détectée du déplacement du doigt et un rapport d'amplitudes B/A strictement supérieur à un seuil d'amplification R_{S} ;
- en réponse à un déplacement du doigt ne remplissant pas la condition de pilotage long, envoyer à l'équipement un ordre de changement d'état avec une amplitude B fonction de l'amplitude détectée A du déplacement du doigt et un rapport d'amplification B/A inférieur ou égal au seuil d'amplification donné R_{S}.

Suivant un mode de réalisation, l'interface peut comprendre notamment une molette à déplacement angulaire incrémentiel ou un pavé tactile. Naturellement, les moyens peuvent être adaptés pour effectuer dans le détail l'une ou l'autre des variantes de procédé précédemment évoquées.

Suivant un autre aspect de l'invention, celle-ci a trait à une installation domotique comportant une télécommande nomade telle que décrite précédemment et un équipement communiquant avec la télécommande.

Suivant un autre aspect de l'invention, celle-ci a trait à un procédé de commande d'au moins un actionneur d'écran d'une installation domotique se trouvant dans une position courante et mobile jusqu'à au moins une position extrême, à l'aide d'une télécommande nomade sans fil comportant une interface permettant de détecter une amplitude d'un déplacement du doigt d'un utilisateur, le procédé étant tel que :
- en réponse à un déplacement du doigt ayant une amplitude détectée inférieure à un seuil donné, l'actionneur effectue depuis la position courante un mouvement ayant une amplitude fonction d'une amplitude détectée du déplacement du doigt ;
- en réponse à un déplacement du doigt ayant une amplitude détectée supérieure au seuil donné, l'actionneur se déplace de la position courante à la position extrême.

Suivant un autre aspect de l'invention, celle-ci a trait à un procédé de commande au moins un actionneur d'écran d'une installation domotique se trouvant dans une position courante et mobile jusqu'à au moins une position extrême, à l'aide d'une télécommande nomade sans fil comportant une interface permettant de détecter une amplitude d'un déplacement du doigt d'un utilisateur, le procédé étant tel que
- en réponse à un déplacement du doigt ayant une vitesse détectée inférieure à un seuil donné, l'actionneur effectue depuis la position courante un mouvement ayant une amplitude fonction d'une amplitude détectée du déplacement du doigt ;
- en réponse à un déplacement du doigt ayant une vitesse détectée supérieure au seuil donné, l'actionneur se déplace de la position courante à la position extrême.

De préférence, l'interface est apte à détecter au moins deux directions opposées du déplacement du doigt, directions associées chacune à une parmi au moins deux directions opposées de changement d'état de l'équipement. Dans cette hypothèse, le changement d'état de l'actionneur est effectué dans la direction de changement d'état associée à la direction de déplacement du doigt détectée.

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue schématique d'une installation domotique selon un aspect de l'invention ;
- la figure 2, une vue de détail d'une télécommande de l'installation de la figure 1 ;
- la figure 3, une première variante d'une loi de comportement souhaitée de l'installation de la figure 1 ;
- la figure 4, un logigramme de mise en oeuvre de la loi de comportement de la figure 3 ;
- la figure 5, une deuxième variante d'une loi de comportement souhaitée de l'installation de la figure 1 ;
- la figure 6, un logigramme de mise en oeuvre de la loi de comportement de la figure 5 ;
- la figure 7, une troisième variante d'une loi de comportement souhaitée de l'installation de la figure 1 ;
- la figure 8, un logigramme de mise en oeuvre de la loi de comportement de la figure 7.

Pour plus de clarté, les éléments identiques seront repérés par des signes de référence identiques sur l'ensemble des figures.

### DESCRIPTION DÉTAILLÉE DE MODES DE RÉALISATION

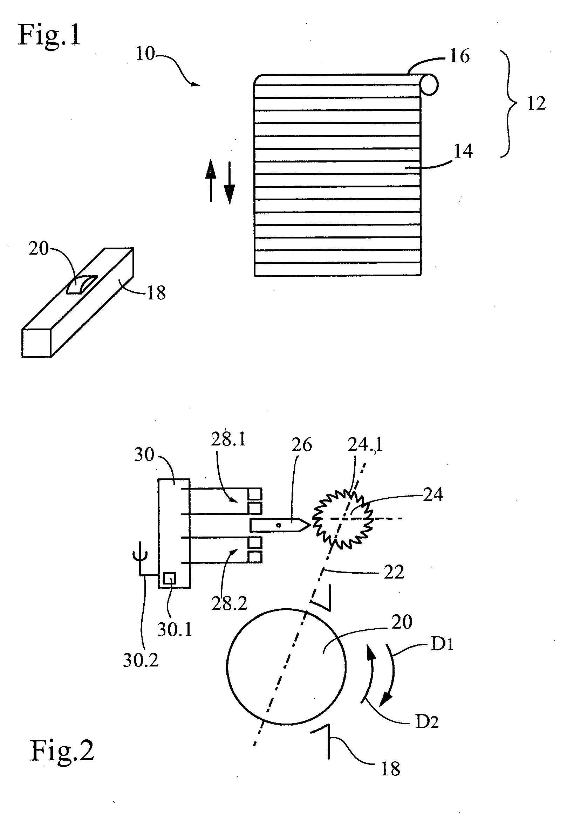

Sur la figure 1 est schématiquement illustrée une installation domotique 10 comportant d'une part un équipement communiquant 12 constitué par un store à lattes 14 motorisé par un actionneur 16, et d'autre part une télécommande 18, de préférence une télécommande nomade non filaire communiquant avec l'actionneur par exemple par ondes radioélectriques ou infrarouges.

La télécommande 18, illustrée sur la figure 2, est équipée d'une molette 20 pouvant tourner autour de son axe 22 dans deux sens opposés D1, D2. La molette est solidaire d'une roue dentée 24 coopérant avec un levier 26 qui actionne, à chaque passage d'une dent 24.1 dans un sens donné D1 ou D2 un contact électrique 28.1 ou 28.2, respectivement. Un circuit électrique 30 permet ainsi de détecter les impulsions électriques des contacts 28.1, 28.2 correspondant à des incréments angulaires de rotation de la molette dans le sens correspondant. Le circuit électrique 30 comporte également un compteur temporel 30.1 et des moyens 30.2 pour émettre des ordres de commande de déplacement de l'équipement 18. Alternativement, la télécommande comprend des moyens électroniques ou optiques pour détecter les incréments angulaires de rotation de la molette. On peut déduire de cette donnée une amplitude A, qui pourra être par exemple la somme algébrique des incréments angulaires sur un intervalle de temps donné (par exemple 100 ms). Préférentiellement, l'intervalle de temps est variable et il est constitué de la somme d'intervalles élémentaires pendant lesquels la télécommande scrute l'apparition d'un nouvel incrément angulaire. A l'issue d'un intervalle élémentaire sans apparition de nouvel incrément, la télécommande totalise le nombre d'incréments détectés qui constitue l'amplitude A. La télécommande émet alors un ordre de changement d'état et le compteur d'incréments est remis à zéro.

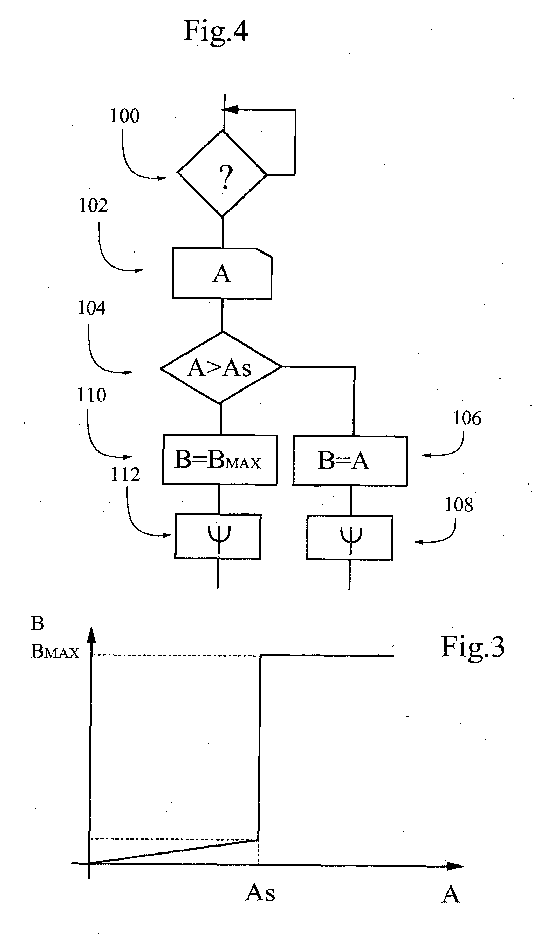

On a représenté sur la figure 3 une loi de comportement souhaité de l'installation que l'on peut décrire de la façon suivante : tant que l'amplitude de la molette reste inférieure à un seuil donné A_{S}, l'amplitude de consigne B varie linéairement avec l'amplitude du déplacement détecté par la molette. Le rapport d'amplitudes R=B/A est constant et égal à une valeur R_{S} peu élevée. Si l'amplitude de rotation de la molette dépasse le seuil A_{S}, l'amplitude de consigne B de rotation de l'actionneur prend une valeur B_{MAX} qui est en pratique supérieure à l'amplitude conduisant l'actionneur jusqu'à sa position de fin de course.

En pratique, on peut mettre en oeuvre cette loi de comportement souhaitée à l'aide d'un microprocesseur ou plus généralement du circuit électrique 36 intégré à la télécommande 18 de la manière suivante, illustrée sur la figure 4. Dans un premier temps, on détecte à l'étape 100 optionnelle une première manipulation, dite de réveil, de la télécommande nomade. Cette manipulation de réveil peut être par exemple une première rotation de la molette, qui, à la différence de rotations suivantes, ne sera pas considérée comme un ordre donné à un store. Alternativement, la manipulation de réveil peut être une pression sur une touche spécifique, ou simplement une vibration du boîtier de la télécommande, correspondant à une prise en main, et détectée par un accéléromètre intégré à la télécommande. Une fois la télécommande en éveil, on détecte à l'étape 102 une rotation de la molette, par comptage algébrique du nombre d'impulsions détecté, qui constitue une mesure d'amplitude A. A la première impulsion, on déclenche également le compteur temporel. Comme expliqué précédemment, suite à un premier incrément détecté, la télécommande scrute l'apparition d'un nouvel incrément angulaire pendant un intervalle de temps élémentaire. A chaque nouvel incrément détecté, la télécommande réinitialise l'intervalle de temps élémentaire et incrémente le compteur d'impulsions. A l'issue d'un intervalle élémentaire sans apparition de nouvel incrément, la télécommande totalise le nombre d'incréments détectés qui constitue l'amplitude A.

On compare à l'issue de l'étape 102 la valeur d'amplitude détectée A à un seuil prédéterminé Aₛ (étape 104), par exemple un seuil de 6 incréments, pour en déduire si l'on doit interpréter le déplacement de la molette 20 comme un déplacement de précision ou un déplacement rapide. Si l'amplitude A est inférieure au seuil d'amplitude A_{S}, le déplacement est interprété comme un déplacement de précision (étape 106), et l'on fait correspondre à chaque incrément angulaire de la molette un pas de rotation unitaire de l'actionneur, de sorte que la télécommande envoie à l'actionneur à l'étape 108 un ordre de progresser d'un nombre A de pas correspond à la valeur détectée de l'amplitude A de la rotation de la molette (R_{S}=1). Si l'amplitude A de la rotation est supérieure au seuil A_{S}, le déplacement est interprété à l'étape 110 comme remplissant les conditions de pilotage long. La télécommande peut alors envoyer un ordre de déplacement vers la position de fin de course correspondante. Ceci peut être réalisé par l'action suivante : la télécommande envoie alors à l'étape 112 une consigne de déplacement B_{MAX} d'amplitude supérieure à l'amplitude maximale de déplacement de l'actionneur, de sorte que celui-ci atteint sa position de fin de course où il s'arrête de lui-même.

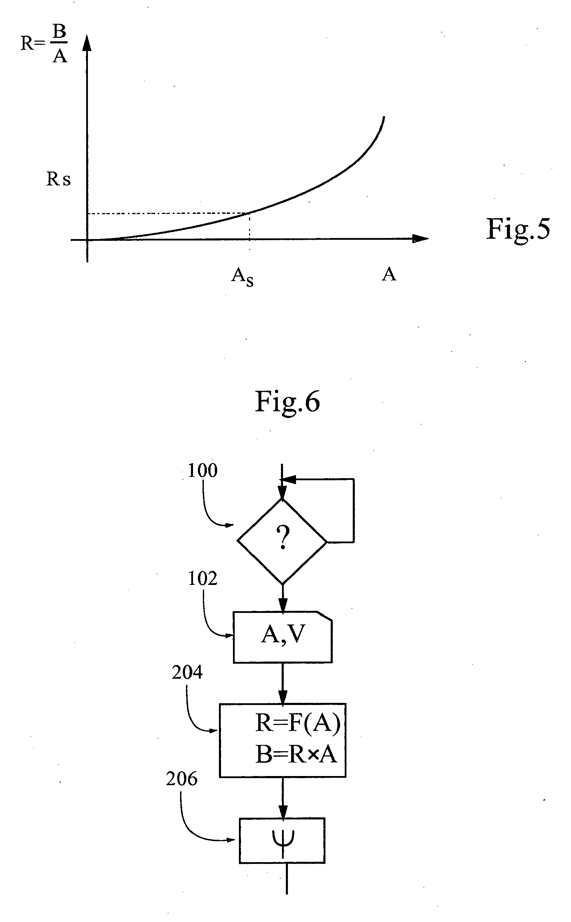

On a représenté sur la figure 5 une loi de comportement souhaité de l'installation, suivant laquelle un rapport d'amplitudes R=B/A entre une amplitude A de rotation de la molette et l'amplitude B de rotation de l'actionneur est une fonction de l'amplitude A de rotation de la molette. On a donc porté en abscisse l'amplitude de rotation de la molette (par exemple un nombre d'impulsions des contacts électriques 28.1, 28.2 par unité de temps), et en ordonnée le rapport R=B/A. On constate que la fonction R=f(A) est une fonction continue et strictement croissante de l'amplitude détectée A, qui est en l'occurrence une fonction exponentielle. Pour toute amplitude seuil A_{S} arbitrairement définie, on constate que lorsque l'amplitude détectée est inférieure à l'amplitude seuil A_{S}, le rapport R=f(A) est inférieur à R_{S}=f(A_{S}) alors que R=f(A) est supérieur à R_{S} si A est supérieur à A_{S}.

Pour mettre en oeuvre cette loi de comportement, on peut procéder comme illustré sur la figure 6. Après une étape 100 d'éveil, on détecte à l'étape 102 l'amplitude A suivant la méthode décrite pour le premier mode de réalisation. Puis, à l'étape 204, on va chercher dans une table ou l'on détermine par le calcul le rapport d'amplitudes R correspondant à l'amplitude détectée A. La télécommande multiplie l'amplitude A observée par le rapport d'amplitude R et envoie à l'actionneur à l'étape 206 une commande de déplacement d'amplitude B=AxR.

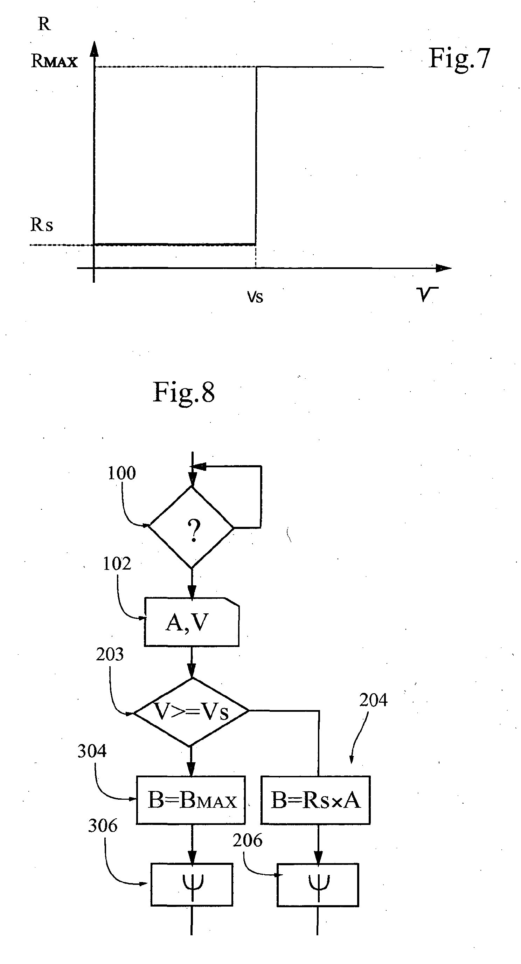

On peut également envisager une loi de comportement fonction d'une vitesse détectée V de déplacement du doigt de l'utilisateur. Un exemple d'une telle loi est illustré sur la figure 7, sur laquelle on a porté en abscisse la vitesse détectée V et en ordonnée le rapport R=B/A entre une amplitude A de rotation de la molette et l'amplitude B de rotation de l'actionneur. On constate que la fonction R=f(V) est une fonction continue et strictement croissante de la vitesse détectée V, qui est en l'occurrence une fonction exponentielle. Pour toute vitesse seuil V_{S} arbitrairement définie, on constate que lorsque l'amplitude détectée est inférieure à la vitesse seuil V_{S}, le rapport R=f(V) est inférieur à R_{S}=f(V_{S}) alors que R=f(V) est supérieur à R_{S} si V est supérieur à V_{S}.

Pour mettre en oeuvre cette loi de comportement, on peut procéder comme illustré sur la figure 8. Après une étape 100 d'éveil, on détecte à l'étape 102 l'amplitude A suivant la méthode décrite pour le premier mode de réalisation. On détermine également la vitesse de V, par exemple en déterminant le temps écoulé pour la réalisation de l'ensemble des incréments à l'étape 102. Puis, à l'étape 304, on va chercher dans une table ou l'on détermine par le calcul le rapport d'amplitudes R correspondant à la vitesse de rotation détectée V. La télécommande multiplie l'amplitude A observée par le rapport d'amplitude R et envoie à l'actionneur à l'étape 206 une commande de déplacement d'amplitude B=AxR.

Naturellement, diverses variantes sont envisageables. On peut notamment prévoir une loi qui soit une fonction en escalier avec plusieurs valeurs seuils de la vitesse ou de l'amplitude.

Les incréments de déplacement de l'actionneur peuvent être définis par tout moyen, par exemple en définissant une durée unitaire d'alimentation électrique de l'actionneur ou un angle unitaire de rotation.

Le circuit électrique interprétant les signaux des capteurs 28.1, 28.2 peut être au moins partiellement situé au niveau de l'actionneur.

On peut également envisager que la vitesse de déplacement de l'actionneur soit fonction de la vitesse de la molette, de sorte que les mouvements de grande amplitude soient effectués à plus grande vitesse que les mouvements de faible amplitude.

Par analogie, le même type de commande peut être appliqué à une installation domotique dont les équipements comportent des éclairages à intensité variable.

## Revendications

1. Procédé de commande d'au moins un équipement (12) d'une installation domotique (10) se trouvant dans un état courant et susceptible de subir des changements d'état d'amplitude variable entre l'état courant et au moins un état extrême, mis en oeuvre à l'aide d'une télécommande (18) comportant une interface (20) permettant de détecter au moins une amplitude A ou une vitesse V d'un déplacement d'un doigt d'un utilisateur, **caractérisé en ce que**
- lorsque une condition dite « de pilotage long » est remplie, cette condition étant fonction au moins de l'amplitude A ou de la vitesse V de déplacement du doigt, l'équipement change d'état jusqu'à atteindre l'état extrême, ou change d'état avec une amplitude B fonction de l'amplitude détectée A et un rapport d'amplitudes R=B/A strictement supérieur à un seuil d'amplification R_{S} donné ;
- lorsque la condition de pilotage long n'est pas remplie, l'équipement change d'état avec une amplitude B fonction de l'amplitude détectée A et un rapport d'amplification R=B/A inférieur ou égal au seuil d'amplification R_{S}.

2. Procédé selon la revendication 1, dans lequel l'interface (20) est apte à détecter au moins deux sens opposés (D1, D2) du déplacement du doigt associés chacun à un sens différent parmi au moins deux sens opposés de changement d'état de l'équipement, **caractérisé en ce que** le changement de l'actionneur est effectué dans le sens du changement d'état associé au sens de déplacement du doigt détecté.

3. Procédé selon la revendication 1 ou la revendication 2, **caractérisé en ce que** on détermine l'amplitude A comme une amplitude d'un déplacement entre deux périodes consécutives d'absence de détection de déplacement dépassant une durée prédéterminée.

4. Procédé selon l'une quelconque des revendications précédentes, **caractérisé en ce que** l'équipement change d'état à l'issue d'une période d'absence de détection de déplacement dépassant une durée prédéterminée.

5. Procédé selon l'une quelconque des revendications précédentes, **caractérisée en ce que** un circuit électronique de la télécommande détermine si la condition de pilotage long est ou non remplie, et envoie à l'équipement un ordre correspondant de changement d'état.

6. Procédé selon l'une quelconque des revendications 1 à 4, **caractérisée en ce que** un circuit électronique de l'équipement détermine si la condition de pilotage long est ou non remplie, en fonction de données reçues de la télécommande.

7. Procédé selon l'une quelconque des revendications précédentes, **caractérisée en ce que** la condition de pilotage long est remplie si et seulement si l'amplitude détectée A de déplacement du doigt est supérieure à un seuil d'amplitude A_{S}.

8. Procédé selon la revendication précédente, **caractérisé en ce que** l'amplitude détectée A est fonction d'un nombre d'incréments angulaires d'une molette de l'interface.

9. Procédé selon la revendication précédente, **caractérisé en ce que** l'amplitude A détectée est une longueur cumulée de glissements sur un pavé tactile.

10. Procédé selon l'une quelconque des revendications précédentes, **caractérisé en ce que** l'équipement comporte un actionneur électromécanique, les changements d'états correspondants à des mouvements de l'actionneur électromécanique.

11. Procédé selon l'une quelconque des revendications 1 à 9, **caractérisé en ce que** l'équipement comporte un éclairage à intensité lumineuse et/ou orientation variables, les changements d'états correspondants à des variations d'intensité lumineuse et/ou d'orientation de l'éclairage.

12. Télécommande (18) d'un équipement (12) apte à subir des changements d'état d'amplitude variable entre au moins un état courant et au moins un état extrême, la télécommande (18) comportant une interface (20) permettant de détecter une amplitude d'un déplacement d'un doigt d'un utilisateur, **caractérisé en ce qu'**elle comporte en outre des moyens (30) pour :
- en réponse à un déplacement du doigt remplissant une condition dite « de pilotage long », cette condition étant fonction au moins de l'amplitude A ou d'une vitesse V de déplacement du doigt, envoyer à l'équipement un ordre de changer d'état jusqu'à atteindre l'état extrême, ou de changer d'état avec une amplitude B fonction de l'amplitude détectée du déplacement du doigt et un rapport d'amplitudes B/A strictement supérieur à un seuil d'amplification donné R_{S},
- en réponse à un déplacement du doigt ne remplissant pas la condition de pilotage long, envoyer à l'équipement un ordre de changement d'état avec une amplitude B fonction de l'amplitude détectée du déplacement du doigt et un rapport d'amplification B/A inférieur ou égal au seuil d'amplification donné R_{S}.

13. Télécommande selon la revendication 12, **caractérisé en ce que** l'interface comporte une molette (20).

14. Télécommande selon la revendication 12, **caractérisé en ce que** l'interface comporte un pavé tactile.

15. Télécommande selon l'une quelconque des revendications 12 à 14, **caractérisé en ce que** la télécommande est une télécommande nomade sans fil.

16. Installation domotique (10) comportant une télécommande (18) selon l'une quelconque des revendications 12 à 15 et un équipement (12) apte à communiquer avec la télécommande.

## Patentansprüche

1. Verfahren zur Steuerung mindestens einer Ausrüstung (12) einer haustechnischen Anlage (10), die sich in einem aktuellen Zustand befindet und imstande ist, Zustandsänderungen variabler Amplituden zwischen dem aktuellen Zustand und mindestens einem extremen Zustand unterzogen zu werden, die mit Hilfe einer Fernbedienung (18) umgesetzt werden, die eine Schnittstelle (20) aufweist, die es erlaubt, mindestens eine Amplitude A oder eine Verlagerungsgeschwindigkeit V eines Fingers eines Benutzers zu ermitteln, **dadurch gekennzeichnet, dass**,
- wenn eine als "lange Steuerung" bezeichnete Bedingung erfüllt ist, wobei diese Bedingung Funktion mindestens der Amplitude A oder der Verlagerungsgeschwindigkeit V des Fingers ist, die Ausrüstung den Zustand ändert, bis der extreme Zustand erreicht ist, oder den Zustand mit einer Amplitude B, die Funktion der ermittelten Amplitude A ist, und einem Amplitudenverhältnis R=B/A, das größer als ein gegebener Verstärkungsschwellwert R_{S} ist, ändert,
- wenn die Bedingung der langen Steuerung nicht erfüllt ist, die Ausrüstung den Zustand mit einer Amplitude B, die Funktion der ermittelten Amplitude A ist, und einem Verstärkungsverhältnis R=B/A, das kleiner als der Verstärkungsschwellwert R_{S} ist oder diesem entspricht, ändert.

2. Verfahren nach Anspruch 1, wobei die Schnittstelle (20) imstande ist, mindestens zwei entgegengesetzte Verlagerungsrichtungen (D1, D2) des Fingers zu ermitteln, die jeweils einer unterschiedlichen Richtung von mindestens zwei entgegengesetzten Zustandsänderungsrichtungen der Ausrüstung zugeordnet sind, **dadurch gekennzeichnet, dass** die Änderung des Stellglieds in die Zustandsänderungsrichtung durchgeführt wird, die der ermittelten Verlagerungsrichtung des Fingers zugeordnet ist.

3. Verfahren nach Anspruch 1 oder Anspruch 2, **dadurch gekennzeichnet, dass** die Amplitude A als eine Amplitude einer Verlagerung zwischen zwei aufeinanderfolgenden Verlagerungsdetektions-Abwesenheitsperioden bestimmt wird, die eine bestimmte Dauer überschreiten.

4. Verfahren nach einem der vorangehenden Ansprüche, **dadurch gekennzeichnet, dass** die Ausrüstung den Zustand nach Abschluss einer Verlagerungsdetektions-Abwesenheitsperiode ändert, die eine vorbestimmte Dauer überschreitet.

5. Verfahren nach einem der vorangehenden Ansprüche, **dadurch gekennzeichnet, dass** ein elektronischer Kreis der Fernbedienung bestimmt, ob die Bedingung der langen Steuerung erfüllt ist oder nicht und der Ausrüstung einen entsprechenden Zustandsänderungsbefehl schickt.

6. Verfahren nach einem der Ansprüche 1 bis 4, **dadurch gekennzeichnet, dass** ein elektronischer Kreis der Ausrüstung in Abhängigkeit von von der Fernbedienung erhaltenen Daten bestimmt, ob die Bedingung der langen Steuerung erfüllt ist oder nicht.

7. Verfahren nach einem der vorangehenden Ansprüche, **dadurch gekennzeichnet, dass** die Bedingungen der langen Steuerung erfüllt ist, wenn und nur wenn die ermittelte Verlagerungsamplitude A des Fingers größer als ein Amplitudenschwellwert A_{S} ist.

8. Verfahren nach vorangehendem Anspruch, **dadurch gekennzeichnet, dass** die ermittelte Amplitude A Funktion einer Anzahl von Winkelinkrementen eines Rändelrads der Schnittstelle ist

9. Verfahren nach vorangehendem Anspruch, **dadurch gekennzeichnet, dass** die ermittelte Amplitude A einen kumulierte Länge von Streichungen über ein Touchpad ist.

10. Verfahren nach einem der vorangehenden Ansprüche, **dadurch gekennzeichnet, dass** die Ausrüstung ein elektromagnetisches Stellglied aufweist, wobei die Zustandsänderungen Bewegungen des elektromagnetischen Stellglieds entsprechen.

11. Verfahren nach einem der Ansprüche 1 bis 9, **dadurch gekennzeichnet, dass** die Ausrüstung eine Beleuchtung mit einer Lichtstärke und/oder Ausrichtung aufweist, die variabel sind, wobei die Zustandsänderungen Änderungen der Lichtstärke und/oder der Ausrichtung der Beleuchtung entsprechen.

12. Fernbedienung (18) einer Ausrüstung (12), die imstande ist, Zustandsänderungen variabler Amplituden zwischen mindestens einem aktuellen Zustand und mindestens einem extremen Zustand unterzogen zu werden, wobei die Fernbedienung (18) eine Schnittstelle (20) aufweist, die erlaubt, eine Verlagerungsamplitude eines Fingers eines Benutzers zu ermitteln, **dadurch gekennzeichnet, dass** sie ferner Mittel (30) aufweist, um:
- als Antwort auf eine Verlagerung des Fingers, die eine als "lange Steuerung" bezeichnete Bedingung erfüllt, wobei diese Bedingung Funktion mindestens der Amplitude A oder einer Verlagerungsgeschwindigkeit V des Fingers ist, an die Ausrüstung einen Zustandsänderungsbefehl zu schicken, bis der extreme Zustand erreicht ist, oder den Zustand mit einer Amplitude B, die Funktion der ermittelten Amplitude der Fingerverlagerung ist, und einem Amplitudenverhältnis B/A, das größer als ein gegebener Verstärkungsschwellwert R_{S} ist, zu ändern,
- als Antwort auf eine Verlagerung des Fingers, die die Bedingung der langen Steuerung nicht erfüllt, an die Ausrüstung einen Zustandsänderungsbefehl mit einer Amplitude B, die Funktion der ermittelten Amplitude der Fingerverlagerung ist, und einem Verstärkungsverhältnis B/A, das kleiner als der gegebene Verstärkungsschwellwert R_{S} ist oder diesem entspricht, zu schicken.

13. Fernbedienung nach Anspruch 12, **dadurch gekennzeichnet, dass** die Schnittstelle ein Rändelrad (20) aufweist.

14. Fernbedienung nach Anspruch 12, **dadurch gekennzeichnet, dass** die Schnittstelle ein Touchpad aufweist.

15. Fernbedienung nach einem der Ansprüche 12 bis 14, **dadurch gekennzeichnet, dass** die Fernbedienung eine drahtlose tragbare Fernbedienung ist.

16. Haustechnische Anlage (10), die eine Fernbedienung (18) nach einem der Ansprüche 12 bis 15 und mindestens eine Ausrüstung (12) aufweist, die imstande ist, mit der Fernbedienung zu kommunizieren.

## Claims

1. A method for controlling at least one piece of equipment (12) of a home automation installation (10) found in a current state and which may undergo state changes of variable amplitude between the current state and at least one extreme state, applied by means of a remote control (18) including an interface (20) allowing detection of at least one amplitude A or one displacement speed V of a finger of a user, **characterized in that**
- when a so-called « long-term control » condition is fulfilled, this condition depending at least on the amplitude A or on the displacement speed V of the finger, the piece of equipment changes state until it attains an extreme state, or changes state with an amplitude B depending on the detected amplitude A and an amplitude ratio R=B/A strictly greater than a given amplification threshold R_{S};
- when the long-term control condition is not fulfilled, the piece of equipment changes state with an amplitude B depending on the detected amplitude A and an amplitude ratio R=B/A strictly less than or equal to the amplification threshold R_{S}.

2. The method according to claim 1, wherein the interface (20) is able to detect at least two opposite displacement directions (D1, D2) of the finger, each associated with a different direction from among at least 2 opposite directions of change of state of the piece of equipment, **characterized in that** the change of the actuator is made in the direction of the change of state associated with the detected displacement direction of the finger.

3. The method according to claim 1 or claim 2, **characterized in that** the amplitude A is determined as an amplitude of a displacement between two consecutive periods of absence of detection of a displacement, which exceed a predetermined duration.

4. The method according to any of the preceding claims, **characterized in that** the piece of equipment changes state at the end of a period of absence of detection of a displacement, which exceeds a predetermined duration.

5. The method according to any of the preceding claims, **characterized in that** an electronic circuit of the remote control determines whether the long-term control condition is fulfilled or not, and sends to the piece of equipment an order corresponding to a change of state.

6. The method according to any of claims 1 to 4, **characterized in that** an electronic circuit of the piece of equipment determines whether the long-term control condition is fulfilled or not, depending on the data received from the remote control.

7. The method according to any of the preceding claims, **characterized in that** the long-term control condition is fulfilled if and only if the detected displacement amplitude A of the finger is greater than an amplitude threshold As.

8. The method according to the preceding claim, **characterized in that** the detected amplitude A depends on a number of angular increments of a thumbwheel of the interface.

9. The method according to the preceding claim, **characterized in that** the detected amplitude A is an accumulated length of slips over a touchpad.

10. The method according to any of the preceding claims, **characterized in that** the piece of equipment includes an electromechanical actuator, the changes of states corresponding to movements of the electromechanical actuator.

11. The method according to any of claims 1 to 9, **characterized in that** the piece of equipment includes lighting with variable light intensity and/or orientation, the changes of states corresponding to variations in light intensity and/or orientation of the lighting.

12. A remote control (18) of a piece of equipment (12) able to undergo changes of state of variable amplitude between at least one current state and at least one extreme state, the remote control (18) including an interface (20) allowing detection of a displacement amplitude of a finger of a user, **characterized in that** it further includes means (30) for:
- in response to a displacement of the finger fulfilling a so-called « long-term control » condition, this condition depending at least on the amplitude A or on a displacement speed V of the finger, sending to the piece of equipment an order to change state until it attains the extreme state, or to change state with an amplitude B depending on the detected displacement amplitude of the finger and a ratio of amplitudes B/A strictly greater than a given amplification threshold R_{S},
- in response to a displacement of the finger not fulfilling the long-term control condition, sending to the piece of equipment an order to change state with an amplitude B depending on the detected amplitude of the displacement of the finger and an amplification ratio B/A of less than or equal to the given amplification threshold R_{S}.

13. The remote control according to claim 12, **characterized in that** the interface includes a thumbwheel (20).

14. The remote control according to claim 12, **characterized in that** the interface includes a touchpad.

15. The remote control according to any of claims 12 to 14, **characterized in that** the remote control is a wireless mobile remote control.

16. A home automation installation (10) including a remote control (18) according to any of claims 12 to 15 and a piece of equipment (12) able to communicate with the remote control.
